# EUROPÄISCHE PATENTSCHRIFT

(11) **EP 3 870 462 B1**
(45) Veröffentlichungstag und Bekanntmachung des Hinweises auf die Patenterteilung: **06.12.2023**
(21) Anmeldenummer: 19766242.2
(22) Anmeldetag: 10.09.2019
(51) Int. Cl.: B62K 25/28, B62K 25/04, B60G 17/005, B60G 17/017

(54) **FESTLEGEEINRICHTUNG FÜR EINE SCHWINGE EINES NEIGEFAHRZEUGS SOWIE VERFAHREN ZUM BETREIBEN EINER DERARTIGEN FESTELEGEEINRICHTUNG**
FIXING DEVICE FOR A SWING ARM OF A TILTING VEHICLE, AND METHOD FOR OPERATING SUCH A FIXING DEVICE
DISPOSITIF DE FIXATION D'UN BRAS OSCILLANT DE VÉHICULE INCLINABLE ET PROCÉDÉ POUR FAIRE FONCTIONNER UN TEL DISPOSITIF DE FIXATION

(30) Priorität: 22.10.2018 DE 102018126239
(43) Veröffentlichungstag der Anmeldung: 01.09.2021
(73) Patentinhaber: Bayerische Motoren Werke Aktiengesellschaft, 80809 München (DE)
(72) Erfinder: SEIDL, Josef, 94342 Straßkirchen (DE)
(86) Internationale Anmeldenummer: PCT/EP2019/074077
(87) Internationale Veröffentlichungsnummer: WO 2020/083557

(56) Entgegenhaltungen:
- EP-A1- 1 241 087
- EP-A1- 3 144 164
- EP-A1- 3 144 165
- WO-A1-2018/059761
- FR-A1- 2 799 430

## Beschreibung

Die Erfindung betrifft eine Festlegeeinrichtung einer Schwinge eines Neigefahrzeugs mit mindestens einem ersten Festlegemittel, das mittelbar oder unmittelbar an einer Tragstruktur des Neigefahrzeugs festgelegt ist, mit mindestens einem zweiten Festlegemittel , das mittelbar oder unmittelbar an einer relativ zur Tragstruktur bewegbaren und einen Federweg umfassenden Radaufhängung, die von einer ausgefederten Funktionsstellung, in der ein Abstand einer an der Radaufhängung festgelegten Radeinheit zu einer an der Tragstruktur festgelegten Sitzeinheit maximal ist, in eine eingefederte Funktionsstellung, in der der Abstand zwischen Radeinheit und Sitzeinheit bezüglich der ausgefederten Funktionsstellung reduziert ist, festgelegt ist, und mit mindestens einem Aktuator, durch den das erste Festlegemittel und/oder das zweite Festlegemittel von einer Freigabestellung, in der die beiden Festlegemittel berührungsfrei und relativ zueinander bewegbar angeordnet sind, in eine Festlegestellung überführbar sind, in der die beiden Festlegemittel aneinander festgelegt sind und die Radaufhängung und die Tragstruktur gegen ein Bewegen relativ zueinander festlegen, sowie ein Verfahren zum Betreiben einer derartigen Festlegeeinrichtung.

Neigefahrzeuge umfassen Schwingen an denen ein Hinterrad festgelegt ist. Bei Betrieb des Neigefahrzeugs ist die Schwinge von einem ausgefederten Fahrzustand in einen eingefederten Fahrzustand überführbar. Hierdurch sind Vibrationen und Stöße durch das Überfahren von Fahrbahnunebenheiten abfederbar. Darüber hinaus federt das Neigefahrzeug über die Schwinge Gewichtskraft bedingt ein, sobald ein Fahrer des Neigefahrzeugs auf dem Neigefahrzeug aufsitzt. Hierdurch passt sich das Neigefahrzeug dem Gewicht des Fahrers des Neigefahrzeugs an.

In Abhängigkeit der Fahrzeugkategorie, beispielsweise Enduro, kann das Neigefahrzeug eine Sitzhöhe umfassen, die im ausgefederten Zustand des Neigefahrzeugs für Fahrer des Neigefahrzeugs mit geringer Körpergröße ein Aufsteigen auf das Neigefahrzeug erschwert.

Eine gattungsgemäße Festlegeeinrichtung ist bekannt aus EP 1 241 087 A1.

Aufgabe eines Ausführungsbeispiels der Erfindung ist, ein Neigefahrzeug vorzuschlagen, bei der ein Aufsteigen auf das Neigefahrzeug erleichtert ist.

Diese Aufgabe wird bei einer eingangs genannten Festlegeeinrichtung dadurch gelösst, dass die Radaufhängung um eine Drehachse drehbar an der Tragstruktur gelagert festgelegt ist und dass das erste Festlegemittel mindestens zwei bolzenartige Halteelemente umfasst, die bezüglich der Hochachse des Neigefahrzeugs oberhalb und unterhalb der Drehachse angeordnet sind, wobei das zweite Festlegemittel durch eine Oberfläche der Radaufhängung gebildet ist an der die bolzenartigen Halteelemente des ersten Festlegemittels in der Sperrstellung anliegen..

Dadurch, dass die Festlegeeinrichtung über das erste Festlegemittel und das zweite Festlegemittel ein Festlegen der Radaufhängung relativ zur Tragstruktur ermöglicht, kann die die Sitzhöhe des Neigefahrzeugs vor dem Absteigen reduziert festgelegt werden, wodurch ein erneutes Aufsitzen auf das Neigefahrzeug erleichtert ist.

Dadurch, dass das erste Festlegemittel mindestens zwei bolzenartige Halteelemente umfasst, werden durch die beiden bolzenartigen Haltelemente eine Drehung der Radaufhängung um die Drehachse vermieden und hierdurch die Radaufhängung relativ zur Tragstruktur festgelegt.

Die Radaufhängung kann beispielsweise eine Schwinge eines Neigefahrzeugs umfassen oder einen Längslenker, Telelever, Telegabel oder Duolever des Neigefahrzeugs.

Unter einem Neigefahrzeug werden Fahrräder, Motorräder oder motorradähnliche Kraftfahrzeuge, wie Motorroller, insbesondere zwei-, drei- oder vierrädrige Motorroller, Scooter, neigbare Trikes, Quads oder Dergleichen verstanden.

Es erweist sich als vorteilhaft, wenn die Festlegeeinrichtung mindestens ein manuell betätigbares Schaltmittel umfasst, durch das der Aktuator manuell betätigbar ist und/oder wenn die Festlegeeinrichtung mindestens ein mechanisches, hydraulisches und/oder elektrisches Antriebsmittel umfasst, das durch das Schaltmittel und/oder eine Steuereinheit ansteuerbar ist und durch das der Aktuator automatisch betätigbar ist.

Durch das Vorsehen eines manuell betätigbaren Schaltmittels kann ein Fahrer eines Neigefahrzeugs auf einfache Weise das Neigefahrzeug in der eingefederten Funktionsstellung festlegen. Wenn die Festlegeeinrichtung eine Steuereinheit umfasst, kann das Neigefahrzeug automatisch in der eingefederten Funktionsstellung festgelegt werden, beispielsweise, wenn das Neigefahrzeug geparkt wird. Hierdurch ist gewährleistbar, dass die Sitzhöhe des Neigefahrzeugs nach dessen Benutzung reduziert ist, wobei gleichzeitig der volle Federweg beim Betrieb des Neigefahrzeugs zur Verfügung steht.

Um ein Festlegen des ersten Festlegemittels und/oder des zweiten Festlegemittels in der Festlegestellung zu verhindern, wenn die Radaufhängung in der ausgefederten Funktionsstellung angeordnet ist, erweist es sich als vorteilhaft, wenn die Festlegeeinrichtung mindestens ein Sperrmittel umfasst, durch das der Aktuator, das erste Festlegemittel und/oder das zweite Festlegemittel gegen ein Überführen von der Freigabestellung in die Festlegestellung festlegbar sind.

Durch das Vorsehen eines Sperrmittels, durch das verhindert werden kann, dass das erste Festlegemittel und/oder das zweite Festlegemittel zumindest in der ausgefederten Funktionsstellung in die Festlegestellung überführbar sind, kann gewährleistet werden, dass das Neigefahrzeug nicht in der maximalen Sitzhöhe festgelegt ist.

Bei einer Ausführungsform der Festlegeeinrichtung erweist es sich als vorteilhaft, wenn dem Sperrmittel ein Erfassungselement, wie Kinematik und/oder Sensorelement, funktional zuordenbar oder zugeordnet ist, durch das eine Geschwindigkeit des Neigefahrzeugs erfassbar ist, wobei das Sperrmittel das erste Festlegemittel und/oder das zweite Festlegemittel gegen ein Überführen von der Freigabestellung in die Festlegestellung festlegt, wenn durch das Erfassungselement eine Geschwindigkeit größer als 0 km/h erfassbar ist und wenn das Festlegemittel und das zweite Festlegemittel in der Freigabestellung angeordnet sind, oder wobei das Sperrmittel das erste Festlegemittel und/oder das zweite Festlegemittel in die Freigabestellung überführt, wenn durch das Erfassungselement eine Geschwindigkeit größer als 0 km/h erfassbar ist und wenn das Festlegemittel und das zweite Festlegemittel in der Sperrstellung angeordnet sind.

Solchenfalls wird durch das Erfassungselement eine Geschwindigkeit des Neigefahrzeugs erfasst und durch das Sperrmittel einem Blockieren des Federweges der Radaufhängung bei fahrendem Betrieb des Neigefahrzeugs vorgebeugt.

Darüber hinaus kann solchenfalls das erste Festlegemittel und/oder das zweite Festlegemittel von einer Sperrstellung zurück in die Freigabestellung überführt werden, wenn sich erstes Festlegemittel und zweites Festlegemittel in der Sperrstellung befinden und durch das Erfassungselement eine Geschwindigkeit größer als 4 km/h erfassbar ist. Dieses kann beispielsweise dann der Fall sein, wenn das Neigefahrzeug nach einer Parksituation wieder in Betrieb genommen wird und der Fahrer des Neigefahrzeugs auf dem Neigefahrzeug aufgesessen ist. Hierdurch kann stets ein maximaler Federweg der Radaufhängung gewährleistet werden.

Dadurch, dass das Überführen erst bei einer Geschwindigkeit größer 4 km/h erfolgt, kann das Neigefahrzeug mit oder ohne eingeschalteter Zündung oder laufendem Motor geschoben werden, ohne dass das erste Festlegemittel und/oder das zweite Festlegemittel in die Freigabestellung überführt werden.

Das Erfassungselement kann beispielsweise durch ein Sensorelement gebildet sein, durch das eine Geschwindigkeit des Neigefahrzeugs erfassbar ist oder durch eine Kinematik, die automatisch und mechanisch das erste Festlegemittel und/oder das zweite Festlegemittel in der Freigabestellung anordnet.

Das erste Festlegemittel und/oder das zweite Festlegemittel können grundsätzlich beliebig ausgebildet sein. Das erste Festlegemittel und das zweite Festlegemittel lassen sich einfach und kostengünstig ausbilden, wenn mindestens eines des mindestens einen zweiten Festlegemittels bewegbar, insbesondere drehbar, an der Tragstruktur festgelegt ist und ein Scheibenelement umfasst, an dem mindestens eines des mindestens einen ersten Festlegemittels mit einem Klemmelement an einem Klemmabschnitt des zweiten Festlegemittels reibschlüssig oder an einem Zahnkranz-Abschnitt des zweiten Festlegemittels mit einem Rastelement formschlüssig festlegbar ist.

Solchenfalls kann auf einfache Weise eine kraft- oder reibschlüssige Verbindung oder eine formschlüssige Verbindung zwischen dem ersten Festlegemittel und dem zweiten Festlegemittel erzeugt werden.

Bei einer Ausführungsform der Festlegeeinrichtung lässt sich das Sperrmittel einfach und kostengünstig ausbilden, wenn das Sperrmittel einen Oberflächenabschnitt des zweiten Festlegemittels umfasst, der dem ersten Festlegemittel zumindest in der ausgefederten Funktionsstellung der Radaufhängung zugewandt ist und durch den ein Festlegen des ersten Festlegemittels am zweiten Festlegemittel in der ausgefederten Funktionsstellung der Radaufhängung hemmbar ist und/oder wenn das Sperrmittel die Steuereinheit aufweist, die den Aktuar zumindest in der ausgefederten Funktionsstellung der Radaufhängung durch Festlegen des Antriebsmittel gegen ein Überführen des ersten Festlegemittels in die Festlegestellung festlegt.

Solchenfalls wird ein Einrasten, Einklemmen oder ein Ansteuern des Antriebsmittels durch die bauliche Ausgestaltung des ersten Festlegemittels und/oder des zweiten Festlegemittels realisiert.

Grundsätzlich ist es denkbar, dass sich die beiden bolzenartigen Halteelemente an einer Oberfläche der Radaufhängung abstützen. Bei einer Weiterbildung diese Ausführungsform erweist es sich als vorteilhaft, wenn die Oberfläche der Radaufhängung mindestens zwei Ausnehmungen umfasst, die korrespondierend, insbesondere komplementär, zu den bolzenartigen Halteelementen ausgebildet sind und zumindest in der eingefederten Funktionsstellung durch die bolzenartigen Halteelemente eingreifbar sind.

Ferner ist es denkbar, dass die Festlegeeinrichtung im Bereich der Drehachse der Radaufhängung angeordnet ist oder einen Teil der Drehachse bildet. Um die Festlegeeinrichtung jedoch beabstandet zur Drehachse anordnen zu können, erweist es sich als vorteilhaft, wenn die Festlegeeinrichtung mindestens eine Umlenkeinrichtung aufweist, die ein erstes Umlenkmittel umfasst, das drehfest am zweiten Festlegemittel mittelbar oder unmittelbar festlegbar oder festgelegt ist, und die mindestens ein zweites Umlenkmittel umfasst, das mit einem ersten Ende drehbar an der Radaufhängung festlegbar oder festgelegt ist und das mit einem zweiten Enden drehbar am ersten Umlenkmittel festlegbar oder festgelegt ist.

Schließlich wird die Aufgabe gelöst durch ein Verfahren zum Betreiben einer Festlegeeinrichtung einer Schwinge eines Neigefahrzeugs, mit mindestens einem der zuvor genannten Merkmale, mit den Schritten:
a. Betätigen des Aktuators durch das manuelle Schaltmittel durch einen Fahrer, insbesondere durch Ansteuern des Antriebsmittels, und/oder Betätigen des Aktuators durch die Steuereinheit, insbesondere durch Ansteuern einer Antriebseinheit;
b. Erfassen einer Geschwindigkeit des Neigefahrzeugs durch das dem Sperrmittel zugeordnete Erfassungselement, wie Kinematik und/oder Sensorelement;
c. Sperren des Aktuators, des ersten Festlegemittels und/oder des zweiten Festlegemittels, wenn durch das Erfassungselement eine Geschwindigkeit größer als 0 Km/h erfassbar ist und wenn das erste Festlegemittel und das zweite Festlegemittel in der Freigabestellung angeordnet sind, oder Überführen des Aktuators, des ersten Festlegemittels und/oder des zweiten Festlegemittels in die Freigabestellung, wenn durch das Erfassungselement eine Geschwindigkeit größer als 4 km/h erfassbar ist und wenn das erste Festlegemittel und das zweite Festlegemittel in der Sperrstellung angeordnet sind.
Weitere Merkmale, Einzelheiten und Vorteile der Erfindung ergeben sich aus den beigefügten Patentansprüchen, aus der zeichnerischen Darstellung und nachfolgenden Beschreibung dreier bevorzugter Ausführungsformen der Festlegeeinrichtung.

In der Zeichnung zeigt:
- Figur 1: Eine Seitenansicht auf ein Neigefahrzeug mit einer erfindungsgemäßen Festlegeeinrichtung;
- Figur 2: Eine detaillierte Seitenansicht auf ein erstes nicht beanspruchtesAusführungsbeispiel der Festlegeeinrichtung;
- Figur 3: Eine detaillierte Seitenansicht auf ein zweites nicht beanspruchtesAusführungsbeispiel der Festlegeeinrichtung;
- Figur 4: Eine Seitenansicht auf ein Neigefahrzeug mit der erfindungsgemäßen Festlegeeinrichtung mit bolzenartigen Haltemitteln;
- Figur 5: Ein schematisches Ablaufdiagramm eines erfindungsgemäßen Verfahrens.

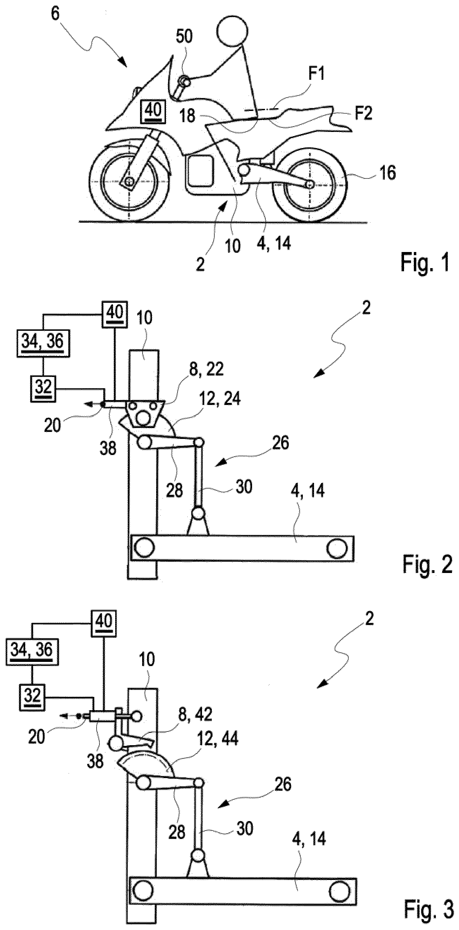

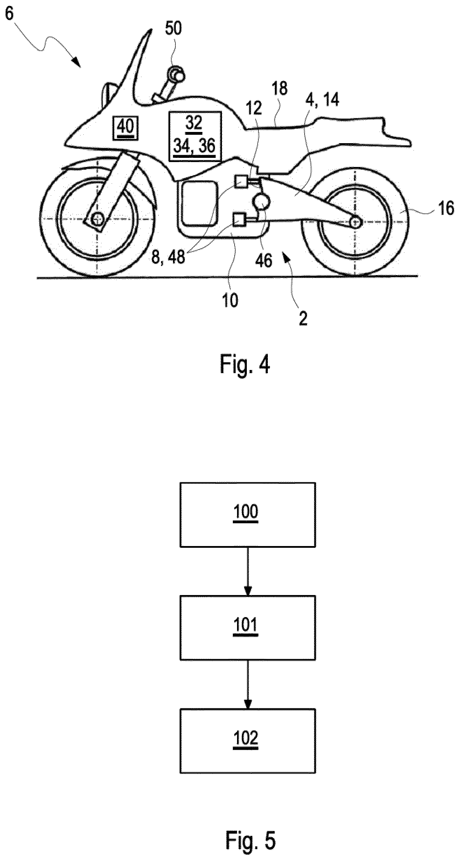

Die Figuren 1 bis 4 zeigen eine insgesamt mit dem Bezugszeichen 2 versehene Festlegeeinrichtung für eine Schwinge 4 eines Neigefahrzeugs 6 (nur in den Figuren 1 und 4 dargestellt). Die Festlegeeinrichtung 2 umfasst bei den in den Figuren gezeigten Beispielen jeweils ein erstes Festlegemittel 8, das unmittelbar an einer Tragstruktur 10 des Neigefahrzeugs 6 festgelegt ist. Darüber hinaus umfasst die Festlegeeinrichtung 2 ein zweites Festlegemittel 12, das mittelbar an einer relativ zur Tragstruktur 10 bewegbaren und einen Federweg umfassenden Radaufhängung 14 anordenbar ist. Die Radaufhängung 14 umfasst bei den in den Figuren gezeigten Beispielen die Schwinge 4. Die Radaufhängung 14 ist von einer ausgefederten Funktionsstellung F1, in der ein Abstand einer an der Radaufhängung 14 festgelegten Radeinheit 16 zu einer an der Tragstruktur 10 festgelegten Sitzeinheit 18 maximal ist, in eine eingefederten Funktionsstellung F2 überführbar, in der der Abstand zwischen Radeinheit 16 und Sitzeinheit 18 bezüglich der ausgefederten Funktionsstellung F1 reduziert ist.

Darüber hinaus umfasst die Festlegeeinrichtung 2 einen Aktuator 20, durch den das erste Festlegemittel 8 und/oder das zweite Festlegemittel 12 von einer Freigabestellung, in der die beiden Festlegemittel 8, 12, berührungsfrei relativ zueinander bewegbar angeordnet sind, in eine Festlegestellung überführbar sind, in der die beiden Festlegemittel 8, 12, aneinander festgelegt sind und die Radaufhängung 14 und die Tragstruktur 10 gegen ein Bewegen relativ zueinander festlegen.

Figur 1 zeigt eine Seitenansicht auf ein Neigefahrzeug 6 mit einer Festlegeeinrichtung 2.

Aus Figur 1 ist ersichtlich, dass eine Sitzhöhe in der eingefederten Funktionsstellung F2 geringer ist als in der ausgefederten Funktionsstellung F1. Hierdurch ist einem Fahrer des Neigefahrzeugs 6 ein Aufsitzen auf das Neigefahrzeug 6 erleichtert.

Figur 2 zeigt ein erstes nicht beanspruchtes Ausführungsbeispiel der Festlegeeinrichtung 2, bei der das erste Festlegemittel 8 ein Klemmelement 22 umfasst, das an einem Klemmabschnitt 24 des zweiten Festlegemittels 12 reibschlüssig festlegbar ist. Darüber hinaus umfassen die in den Figuren 2 und 3 gezeigten Beispiele eine Umlenkeinrichtung 26, die jeweils ein erstes Umlenkmittel 28 umfasst, das drehfest am zweiten Festlegemittel 12 festgelegt ist und die mindestens ein zweites Umlenkmittel 30 umfasst, das mit einem ersten Ende drehbar an der Radaufhängung 14 festgelegt ist und das mit einem zweiten Ende drehbar am ersten Umlenkmittel 28 festgelegt ist.

Darüber hinaus umfassen die in den Figuren gezeigten Beispiele der Festlegeeinrichtung 2 jeweils ein Sperrmittel 32, durch das der Aktuator 20 gegen ein Überführen des ersten Festlegemittels 8 und/oder des zweiten Festlegemittels 12 von der Freigabestellung in die Festlegestellung festlegbar ist. Hierzu umfasst das Sperrmittel 32 ein Erfassungselement 34, das bei den in den Figuren gezeigten Beispielen durch ein Sensorelement 36 gebildet ist, durch das eine Geschwindigkeit des Neigefahrzeugs 6 erfassbar ist. Solchenfalls wird ein Überführen des ersten Festlegemittels 8 und des zweiten Festlegmittels 12 von der Freigabestellung in die Festlegestellung blockiert, wenn das Neigefahrzeug 6 eine Geschwindigkeit größer als 0 km/h umfasst. Wird die Geschwindigkeit von größer als 4 km/h erfasst, wenn sich das erste Festlegemittel 8 und das zweite Festlegemittel 12 bereits in der Festlegestellung befinden, werden das erste Festlegemittel 8 und das zweite Festlegemittel 12 durch das Sperrmittel 32, bzw. durch den Aktuator 20 von der Festlegestellung in die Freigabestellung überführt. Zum Ansteuern des Aktuators 20 oder eines den Aktuator 20 ansteuernden Antriebmittels 38, umfasst die Festlegeeinrichtung 2 jeweils eine Steuereinheit 40.

Figur 3 zeigt ein zweites nicht beanspruchtes Ausführungsbeispiel der Festlegeeinrichtung 2, bei der das erste Festlegemittel 8 durch ein Rastelement 42 gebildet ist und das zweite Festlegemittel 12 durch einen Zahnkranz-Abschnitt 44.

Figur 4 zeigt eine Ansicht der Festlegeeinrichtung 2, bei der die Radaufhängung 14 um eine Drehachse 46 drehbar an der Tragstruktur 10 gelagert festgelegt ist, wobei das erste Festlegemittel 8 zwei bolzenartige Halteelemente 48 umfasst, die bezüglich der Hochachse des Neigefahrzeugs 6 oberhalb und unterhalb der Drehachse 46 angeordnet sind. Das zweite Festlegemittel 12 ist bei dem in Figur 4 gezeigten Ausführungsbeispiel durch eine Oberfläche der Radaufhängung 14 gebildet, an der die bolzenartigen Halteelemente 48 in der Sperrstellung anliegen.

Figur 5 zeigt ein schematisches Ablaufdiagramm eines erfindungsgemäßen Verfahrens zum Betreiben einer Festlegeeinrichtung 2. Anhand der Ausführungsbeispiele der Figuren 1 bis 4 wird nachfolgend das Verfahren erklärt:

In einem ersten Schritt 100 wird der Aktuator 20 durch ein manuelles Schaltmittel 50 betätigt. Hierdurch wird insbesondere das Antriebsmittel 38 angesteuert. Darüber hinaus ist es denkbar, dass bei dem Schritt 100 das Antriebsmittel 38 oder der Aktuator 20 durch die Steuereinheit 40 angesteuert wird.

In einem nachfolgenden Schritt 101 wird eine Geschwindigkeit des Neigefahrzeugs durch das dem Sperrmittel 32 zugeordneten Erfassungselement 34 erfasst.

In einem hieran anschließenden Schritt 102 wird der Aktuator 20, das erste Festlegemittel 8 und/oder das zweite Festlegemittel 12 gesperrt, wenn durch das Erfassungselement 34 eine Geschwindigkeit größer als 0 km/h erfasst wird und wenn das erste Festlegemittel 8 und das zweite Festlegemittel 12 in der Freigabestellung angeordnet sind. Darüber hinaus wird der Aktuator 20, das erste Festlegemittel 8 und/oder das zweite Festlegemittel 12 in die Freigabestellung überführt, wenn durch das Erfassungselement 34 eine Geschwindigkeit größer als 4 km/h erfasst ist und wenn das erste Festlegemittel 8 und das zweite Festlegemittel 12 in der Sperrstellung angeordnet sind.

### Bezugszeichenliste

- 2: Festlegeeinrichtung
- 4: Schwinge
- 6: Neigefahrzeug
- 8: erstes Festlegemittel
- 10: Tragstruktur
- 12: zweites Festlegemittel
- 14: Radaufhängung
- 16: Radeinheit
- 18: Sitzeinheit
- 20: Aktuator
- 22: Klemmelement
- 24: Klemmabschnitt
- 26: Umlenkeinrichtung
- 28: erstes Umlenkmittel
- 30: zweites Umlenkmittel
- 32: Sperrmittel
- 34: Erfassungselement
- 36: Sensorelement
- 38: Antriebsmittel
- 40: Steuereinheit
- 42: Rastelement
- 44: Zahnkranz-Abschnitt
- 46: Drehachse
- 48: bolzenartiges Halteelement
- 50: Schaltmittel

- 100- 102: Verfahrensschritte

- F1: ausgefederte Funktionsstellung
- F2: eingefederte Funktionsstellung

## Patentansprüche

1. Festlegeeinrichtung (2) einer Schwinge (4) eines Neigefahrzeugs (6), mit mindestens einem ersten Festlegemittel (8), das mittelbar oder unmittelbar an einer Tragstruktur (10) des Neigefahrzeugs (6) festgelegt ist, mit mindestens einem zweiten Festlegemittel (12) , das mittelbar oder unmittelbar an einer relativ zur Tragstruktur (10) bewegbaren und einen Federweg umfassenden Radaufhängung (14), die von einer ausgefederten Funktionsstellung (F1), in der ein Abstand einer an der Radaufhängung (14) festgelegten Radeinheit (16) zu einer an der Tragstruktur (10) festgelegten Sitzeinheit (18) maximal ist, in eine eingefederte Funktionsstellung (F2), in der der Abstand zwischen Radeinheit (16) und Sitzeinheit (18) bezüglich der ausgefederten Funktionsstellung (F1) reduziert ist, festgelegt ist, und mit mindestens einem Aktuator (20), durch den das erste Festlegemittel (8) und/oder das zweite Festlegemittel (12) von einer Freigabestellung, in der die beiden Festlegemittel (8, 12) berührungsfrei und relativ zueinander bewegbar angeordnet sind, in eine Festlegestellung überführbar sind, in der die beiden Festlegemittel (8, 12) aneinander festgelegt sind und die Radaufhängung (14) und die Tragstruktur (10) gegen ein Bewegen relativ zueinander festlegen, **dadurch gekennzeichnet, dass** die Radaufhängung (14) um eine Drehachse (46) drehbar an der Tragstruktur (10) gelagert festgelegt ist und dass das erste Festlegemittel (8) mindestens zwei bolzenartige Halteelemente (48) umfasst, die bezüglich der Hochachse des Neigefahrzeugs (6) oberhalb und unterhalb der Drehachse (46) angeordnet sind, wobei das zweite Festlegemittel (12) durch eine Oberfläche der Radaufhängung (14) gebildet ist an der die bolzenartigen Halteelemente (48) des ersten Festlegemittels (8) in der Sperrstellung anliegen.

2. Festlegeeinrichtung (2) nach Anspruch 1, **gekennzeichnet durch** mindestens ein manuell betätigbares Schaltmittel (50), durch das der Aktuator (20) manuell betätigbar ist und/oder durch ein mechanisches, hydraulisches und/oder elektrisches Antriebsmittel (38), das durch das Schaltmittel (50) und/oder eine Steuereinheit (40) ansteuerbar ist und durch das der Aktuator (20) automatisch betätigbar ist.

3. Festlegeeinrichtung (2) nach Anspruch 1 oder 2, **gekennzeichnet durch** mindestens ein Sperrmittel (32), durch das der Aktuator (20), das erste Festlegemittel (8) und/oder das zweite Festlegemittel (12) gegen ein Überführen von der Freigabestellung in die Festlegestellung festlegbar sind.

4. Festlegeeinrichtung (2) nach Anspruch 3, **dadurch gekennzeichnet, dass** dem Sperrmittel (32) ein Erfassungselement (34), wie Kinematik und/oder Sensorelement (36), funktional zuordenbar oder zugeordnet ist, durch das eine Geschwindigkeit des Neigefahrzeugs (6) erfassbar ist, wobei das Sperrmittel (32) das erste Festlegemittel (8) und/oder das zweite Festlegemittel (12) gegen ein Überführen von der Freigabestellung in die Festlegestellung festlegt, wenn durch das Erfassungselement (34) eine Geschwindigkeit größer als 0 km/h erfasst wird und wenn das erste Festlegemittel (8) und das zweite Festlegemittel (12) in der Freigabestellung angeordnet sind, oder wobei das Sperrmittel (32) das erste Festlegemittel (8) und/oder das zweite Festlegemittel (12) in die Freigabestellung überführt, wenn durch das Erfassungselement (34) eine Geschwindigkeit größer als 4 km/h erfasst wird und wenn das erste Festlegemittel (8) und das zweite Festlegemittel (12) in der Sperrstellung angeordnet sind.

5. Festlegeeinrichtung (2) nach einem der vorhergehenden Ansprüche, **dadurch gekennzeichnet, dass** mindestens eines des mindestens einen zweiten Festlegemittels (12) bewegbar, insbesondere drehbar, an der Tragstruktur (10) festgelegt ist und ein Scheibenelement umfasst, an dem mindestens eines des mindestens einen ersten Festlegemittels (8) mit einem Klemmelement (22) an einem Klemmabschnitt (24) des zweiten Festlegemittels (12) reibschlüssig oder an einem Zahnkranz-Abschnitt (44) des zweiten Festlegemittels (12) mit einem Rastelement (42) formschlüssig festlegbar ist.

6. Festlegeeinrichtung (2) nach einem der Ansprüche 3 bis 5, **dadurch gekennzeichnet, dass** das Sperrmittel (32) einen Oberflächenabschnitt des zweiten Festlegemittels (12) umfasst, der dem ersten Festlegemittel (8) zumindest in der ausgefederten Funktionsstellung (F1) der Radaufhängung (14) zugewandt ist und durch den ein Festlegen des ersten Festlegemittels (8) am zweiten Festlegemittel (12) in der ausgefederten Funktionsstellung (F1) der Radaufhängung (14) hemmbar ist und/oder dass das Sperrmittel (32) die Steuereinheit (40) aufweist, die den Aktuator (20) zumindest in der ausgefederten Funktionsstellung (F1) der Radaufhängung (14) durch Festlegen des Antriebsmittel (38) gegen ein Überführen des ersten Festlegemittels (8) in die Festlegestellung festlegt.

7. Festlegeeinrichtung (2) nach einem der vorhergehenden Ansprüche, **dadurch gekennzeichnet, dass** die die Oberfläche der Radaufhängung (14) mindestens zwei Ausnehmungen umfasst, die korrespondierend, insbesondere komplementär, zu den bolzenartigen Halteelementen (48) ausgebildet sind und zumindest in der eingefederten Funktionsstellung (F2) durch die bolzenartigen Halteelemente (48) eingreifbar sind.

8. Festlegeeinrichtung (2) nach einem der vorhergehenden Ansprüche, **gekennzeichnet durch** mindestens eine Umlenkeinrichtung (26), die ein erstes Umlenkmittel (28) umfasst, das drehfest am zweiten Festlegemittel (12) mittelbar oder unmittelbar festlegbar oder festgelegt ist, und die mindestens ein zweites Umlenkmittel (30) umfasst, das mit einem ersten Ende drehbar an der Radaufhängung (14) festlegbar oder festgelegt ist und das mit einem zweiten Ende drehbar am ersten Umlenkmittel (28) festlegbar oder festgelegt ist.

9. Verfahren zum Betreiben einer Festlegeeinrichtung (2) einer Schwinge (4) eines Neigefahrzeugs (6) nach einem der Ansprüche 1 bis 8, mit den Schritten:
a. Betätigen des Aktuators (20) durch ein manuelles Schaltmittel durch einen Fahrer, insbesondere durch Ansteuern des Antriebsmittels (38), und/oder Betätigen des Aktuators (20) durch die Steuereinheit (40), insbesondere durch Ansteuern einer Antriebseinheit;
b. Erfassen einer Geschwindigkeit des Neigefahrzeugs (6) durch das dem Sperrmittel (32) zugeordnete Erfassungselement (34), wie Kinematik und/oder Sensorelement (36);
c. Sperren des Aktuators (20), des ersten Festlegemittels (8) und/oder des zweiten Festlegemittels (12), wenn durch das Erfassungselement (34) eine Geschwindigkeit größer als 0 km/h erfasst wird ist und wenn das erste Festlegemittel (8) und das zweite Festlegemittel (12) in der Freigabestellung angeordnet sind, oder Überführen des Aktuators (20), des ersten Festlegemittels (8) und/oder des zweiten Festlegemittels (12) in die Freigabestellung, wenn durch das Erfassungselement (34) eine Geschwindigkeit größer als 4 km/h erfasst wird und wenn das erste Festlegemittel (8) und das zweite Festlegemittel (12) in der Sperrstellung angeordnet sind.

## Claims

1. Fixing device (2) of a swing arm (4) of a tilting vehicle (6), having at least one first fixing means (8) indirectly or directly fixed to a supporting structure (10) of the tilting vehicle (6), having at least one second fixing means (12) indirectly or directly fixed to a wheel suspension (14) which is movable relative to the supporting structure (10) and comprises a spring travel and from an extended functional position (F1), in which a distance of a wheel unit (16) fixed to the wheel suspension (14) from a seat unit (18) fixed to the supporting structure (10) is at a maximum, into a compressed functional position (F2), in which the distance between wheel unit (16) and seat unit (18) is reduced in relation to the extended functional position (F1), and having at least one actuator (20) by way of which the first fixing means (8) and/or the second fixing means (12) are/is transferable from a release position, in which the two fixing means (8, 12) are arranged so as to be movable relative to one another and without contact, into a fixing position, in which the two fixing means (8, 12) are fixed to one another and fix the wheel suspension (14) and the supporting structure (10) against movement relative to one another, **characterized in that** the wheel suspension (14) is fixed in a manner mounted on the supporting structure (10) so as to be rotatable about an axis of rotation (46), and **in that** the first fixing means (8) comprises at least two bolt-like holding elements (48) which, in relation to the vertical axis of the tilting vehicle (6), are arranged above and below the axis rotation (46), wherein the second fixing means (12) is formed by a surface of the wheel suspension (14) against which the bolt-like holding elements (48) of the first fixing means (8) abut in the locking position.

2. Fixing device (2) according to Claim 1, **characterized by** at least one manually actuatable switching means (50) by way of which the actuator (20) is manually actuatable, and/or by a mechanical, hydraulic and/or electrical drive means (38) which is activatable by way of the switching means (50) and/or a control unit (40) and by way of which the actuator (20) is automatically actuatable.

3. Fixing device (2) according to Claim 1 or 2, **characterized by** at least one locking means (32) by way of which the actuator (20), the first fixing means (8) and/or the second fixing means (12) are/is fixable against transfer from the release position into the fixing position.

4. Fixing device (2) according to Claim 3, **characterized in that** a detection element (34), such as a kinematic mechanism and/or a sensor element (36), is functionally assignable or assigned to the locking means (32) and is able to detect a speed of the tilting vehicle (6), wherein the locking means (32) fixes the first fixing means (8) and/or the second fixing means (12) against transfer from the release position into the fixing position if a speed of greater than 0 km/h is detected by the detection element (34) and if the first fixing means (8) and the second fixing means (12) are arranged in the release position, or wherein the locking means (32) transfers the first fixing means (8) and/or the second fixing means (12) into the release position if a speed of greater than 4 km/h is detected by the detection element (34) and if the first fixing means (8) and the second fixing means (12) are arranged in the locking position.

5. Fixing device (2) according to one of the preceding claims, **characterized in that** at least one of the at least one second fixing means (12) is movably, in particular rotatably, fixed to the supporting structure (10), and comprises a disc element to which at least one of the at least one first fixing means (8) is fixable in a frictionally engaging manner to a clamping portion (24) of the second fixing means (12) by way of a clamping element (22) or in a form-fitting manner to a toothed-ring portion (44) of the second fixing means (12) by way of a latching element (42).

6. Fixing device (2) according to one of Claims 3 to 5, **characterized in that** the locking means (32) comprises a surface portion of the second fixing means (12) that faces towards the first fixing means (8) at least in the extended functional position (F1) of the wheel suspension (14), by way of which surface portion fixing of the first fixing means (8) to the second fixing means (12) is able to be blocked in the extended functional position (F1) of the wheel suspension (14), and/or **in that** the locking means (32) has the control unit (40), which, at least in the extended functional position (F1) of the wheel suspension (14), by way of fixing of the drive means (38), fixes the actuator (20) against transfer of the first fixing means (8) into the fixing position.

7. Fixing device (2) according to one of the preceding claims, **characterized in that** the surface of the wheel suspension (14) comprises at least two cutouts which are formed so as to correspond to, in particular so as to complement, the bolt-like holding elements (48) and into which, at least in the compressed functional position (F2), the bolt-like holding elements (48) are able to engage.

8. Fixing device (2) according to one of the preceding claims, **characterized by** at least one deflection device (26) comprising a first deflection means (28) which is indirectly or directly fixable or fixed in a rotationally conjoint manner to the second fixing means (12), and comprising at least one second deflection means (30) which, by way of a first end, is rotatably fixable or fixed to the wheel suspension (14) and which, by way of a second end, is rotatably fixable or fixed to the first deflection means (28).

9. Method for operating a fixing device (2) of a swing arm (4) of a tilting vehicle (6) according to one of Claims 1 to 8, comprising the steps of:
a. actuation of the actuator (20) by way of a manual switching means by a driver, in particular by way of activation of the drive means (38), and/or actuation of the actuator (20) by way of the control unit (40), in particular by way of activation of the drive unit;
b. detection of a speed of the tilting vehicle (6) by way of the detection element (34), such as a kinematic mechanism and/or a sensor element (36), assigned to the locking means (32);
c. locking of the actuator (20), the first fixing means (8) and/or the second fixing means if a speed of greater than 0 km/h is detected by the detection element (34) and if the first fixing means (8) and the second fixing means (12) are arranged in the release position, or transferring the actuator (20), the first fixing means (8) and/or the second fixing means (12) into the release position if a speed of greater than 4 km/h is detected by the detection element (34) and if the first fixing means (8) and the second fixing means (12) are arranged in the locking position.

## Revendications

1. Dispositif de fixation (2) pour un bras oscillant (4) d'un véhicule inclinable (6), comprenant au moins un premier moyen de fixation (8) qui est fixé directement ou indirectement à une structure porteuse (10) du véhicule inclinable (6), comprenant au moins un deuxième moyen de fixation (12) qui est fixé directement ou indirectement à une suspension de roue (14) mobile par rapport à la structure porteuse (10) et comprenant une course de ressort, qui est d'une position de fonctionnement d'extension (F1), dans laquelle une distance entre une unité de roue (16) fixée à la suspension de roue (14) et une unité de siège (18) fixée à la structure porteuse (10) est maximale, dans une position fonctionnelle de compression (F2), dans laquelle la distance entre l'unité de roue (16) et l'unité de siège (18) est réduite par rapport à la position fonctionnelle d'extension (F1), et avec au moins un actionneur (20) qui fait passer le premier moyen de fixation (8) et/ou le deuxième moyen de fixation (12) d'une position de libération, dans laquelle les deux moyens de fixation (8, 12) sont disposés sans contact et sont mobiles l'un par rapport à l'autre, à une position de fixation, dans laquelle les deux moyens de fixation (8, 12) sont fixés l'un à l'autre et fixent la suspension de roue (14) et la structure porteuse (10) pour empêcher tout mouvement relatif, **caractérisé en ce que** la suspension de roue (14) est fixée sur la structure porteuse (10) de manière à pouvoir tourner autour d'un axe de rotation (46) et **en ce que** le premier moyen de fixation (8) comprend au moins deux éléments de retenue (48) en forme de goujons qui sont disposés au-dessus et au-dessous de l'axe de rotation (46) par rapport à l'axe vertical du véhicule inclinable (6), le deuxième moyen de fixation (12) étant formé par une surface de la suspension de roue (14) sur laquelle les éléments de retenue (48) en forme de goujons du premier moyen de fixation (8) s'appliquent dans la position de blocage.

2. Dispositif d'immobilisation (2) selon la revendication 1, **caractérisé par** au moins un moyen de commutation (50) apte à être actionné manuellement, par lequel l'actionneur (20) est apte à être actionné manuellement et/ou par un moyen d'entraînement (38) mécanique, hydraulique et/ou électrique, qui est apte à être commandé par le moyen de commutation (50) et/ou une unité de commande (40) et par lequel l'actionneur (20) est apte à être actionné automatiquement.

3. Dispositif d'immobilisation (2) selon la revendication 1 ou la revendication 2, **caractérisé par** au moins un moyen de blocage (32) par lequel l'actionneur (20), le premier moyen de fixation (8) et/ou le deuxième moyen de fixation (12) sont aptes à être immobilisés à l'égard d'un passage de la position de libération à la position d'immobilisation.

4. Dispositif d'immobilisation (2) selon la revendication 3, **caractérisé en ce qu'**un élément de détection (34), tel qu'une cinématique et/ou un élément de détection (36), est apte à être associé ou est associé fonctionnellement au moyen de blocage (32), par lequel une vitesse du véhicule inclinable (6) est apte à être détectée, le moyen de blocage (32) immobilisant le premier moyen de fixation (8) et/ou le deuxième moyen de fixation (12) à l'égard d'un passage de la position de libération à la position d'immobilisation, lorsqu'une vitesse supérieure à 0 km/h est détectée par l'élément de détection (34) et lorsque le premier moyen de fixation (8) et le deuxième moyen de fixation (12) sont disposés dans la position de libération, ou dans lequel le moyen de blocage (32) fait passer le premier moyen de fixation (8) et/ou le deuxième moyen de fixation (12) dans la position de libération lorsqu'une vitesse supérieure à 4 km/h est détectée par l'élément de détection (34) et lorsque le premier moyen de fixation (8) et le deuxième moyen de fixation (12) sont disposés dans la position de blocage.

5. Dispositif d'immobilisation (2) selon l'une des revendications précédentes, **caractérisé en ce qu'**au moins un dudit au moins un deuxième moyen de fixation (12) est fixé de manière mobile, en particulier de manière rotative, sur la structure porteuse (10) et comprend un élément de disque, sur lequel au moins un dudit au moins un premier moyen de fixation (8) est apte à être fixé par friction avec un élément de serrage (22) sur une section de serrage (24) du deuxième moyen de fixation (12) ou par complémentarité de forme avec un élément cranté (42) sur une partie (44) formant couronne dentée du deuxième moyen de fixation (12).

6. Dispositif d'immobilisation (2) selon l'une des revendications 3 à 5, **caractérisé en ce que** le moyen de blocage (32) comprend une portion de surface du deuxième moyen de fixation (12), qui est tournée vers le premier moyen de fixation (8) au moins dans la position fonctionnelle d'extension (F1) de la suspension de roue (14) et par laquelle une immobilisation du premier moyen de fixation (8) sur le deuxième moyen de fixation (12) est apte à être inhibée dans la position fonctionnelle d'extension (F1) de la suspension de roue (14) et/ou **en ce que** le moyen de blocage (32) présente l'unité de commande (40), qui immobilise l'actionneur (20) au moins dans la position de fonctionnement d'extension (F1), de la suspension de roue (14) en immobilisant le moyen d'entraînement (38) à l'encontre d'un passage du premier moyen de fixation (8) dans la position d'immobilisation.

7. Dispositif d'immobilisation (2) selon l'une des revendications précédentes, **caractérisé en ce que** la surface de la suspension de roue (14) comprend au moins deux évidements qui sont réalisés de manière correspondante, en particulier de manière complémentaire, aux éléments de retenue (48) en forme de goujons et qui sont aptes à mis en engagement par les éléments de retenue (48) en forme de goujons au moins dans la position fonctionnelle de compression (F2).

8. Dispositif d'immobilisation (2) selon l'une des revendications précédentes, **caractérisé par** au moins un dispositif de renvoi (26) qui comprend un premier moyen de renvoi (28) qui est apte à être fixé ou est fixé de manière solidaire en rotation au deuxième moyen de fixation (12), directement ou indirectement, et qui comprend au moins un deuxième moyen de renvoi (30) qui est apte à être fixé ou est fixé par une première extrémité de manière rotative à la suspension de roue (14) et qui est apte à être fixé ou est fixé par une deuxième extrémité de manière rotative au premier moyen de renvoi (28).

9. Procédé de mise en œuvre d'un dispositif d'immobilisation (2) d'un bras oscillant (4) d'un véhicule inclinable (6) selon l'une des revendications 1 à 8, comprenant les étapes suivantes :
a. actionnement de l'actionneur (20) par un moyen de commutation manuel par un conducteur, notamment par commande du moyen d'entraînement (38), et/ou actionnement de l'actionneur (20) par l'unité de commande (40), notamment par commande d'une unité d'entraînement ;
b. détection d'une vitesse du véhicule inclinable (6) par l'élément de détection (34) associé au moyen de blocage (32), tel que la cinématique et/ou l'élément de détection (36) ;
c. blocage de l'actionneur (20), du premier moyen de fixation (8) et/ou du deuxième moyen de fixation (12), lorsqu'une vitesse supérieure à 0 km/h est détectée par l'élément de détection (34) et lorsque le premier moyen de fixation (8) et le deuxième moyen de fixation (12) sont placés dans la position de déblocage, ou faire passer l'actionneur (20), le premier moyen de fixation (8) et/ou le deuxième moyen de fixation (12) dans la position de libération, lorsqu'une vitesse supérieure à 4 km/h est détectée par l'élément de détection (34) et lorsque le premier moyen de fixation (8) et le deuxième moyen de fixation (12) sont placés dans la position de blocage.
